# EUROPÄISCHE PATENTSCHRIFT

(11) **EP 1 986 530 B1**
(45) Veröffentlichungstag und Bekanntmachung des Hinweises auf die Patenterteilung: **07.10.2009**
(21) Anmeldenummer: 07703743.0
(22) Anmeldetag: 09.01.2007
(51) Int. Cl.: A47J 31/36, A47J 31/46

(54) **HEIZSYSTEM MIT RÜCKFÜHRUNG**
HEATING SYSTEM WITH A RETURN
SYSTÈME DE CHAUFFE POURVU D'UN MOYEN DE RETOUR

(30) Priorität: 14.02.2006 DE 102006006785
(43) Veröffentlichungstag der Anmeldung: 05.11.2008
(73) Patentinhaber: BSH Bosch und Siemens Hausgeräte GmbH, 81739 München (DE)
(72) Erfinder: AIGNER, Andreas, 83313 Siegsdorf (DE); MAGG, Johann, 83368 St. Georgen (DE); OSTERMAIER, Albert, 83371 Stein a. d. Traun (DE); STADLER, Stefan, 83376 Truchtlaching (DE); STEFFL, Michael, 83250 Marquartstein (DE)
(86) Internationale Anmeldenummer: PCT/EP2007/050195
(87) Internationale Veröffentlichungsnummer: WO 2007/093462

(56) Entgegenhaltungen:
- EP-A1- 0 345 521
- EP-A1- 0 797 945
- EP-A1- 1 302 140
- WO-A-02/100227
- WO-A-20/05004684
- DE-A1- 4 204 746

## Beschreibung

Die vorliegende Erfindung betrifft eine Heißgetränkezubereitungsvorrichtung, insbesondere eine Pad-Kaffeemaschine, mit einem Wasserbehälter, einer Heizeinrichtung und einer Brühkammer, die durch eine Flüssigkeitsleitung miteinander verbunden sind. Deren erster Abschnitt liegt zwischen dem Wasserbehälter und der Heizeinrichtung und deren zweiter Abschnitt zwischen der Heizeinrichtung und der Brühkammer. Die Vorrichtung umfasst außerdem eine Rückführleitung, in der oder an deren Einlauf ein Rückführventil angeordnet ist. Zur Vereinfachung, jedoch ohne den Schutzbereich der Erfindung darauf zu beschränken, ist im Folgenden anstatt von Heißgetränkezubereitungsvorrichtungen ausschließlich von Kaffeemaschinen die Rede.

Das Patent EP 0 345 521 B1 betrifft eine entsprechende Vorrichtung zur Herstellung von Getränken, bei der die Rückführleitung mit einem darin angeordneten Ventil vor einem Thermoblock aus einer Flüssigkeitsleitung abzweigt und in den Wasserbehälter zurückgeführt wird. Sie dient der Entlüftung der Wasserleitung vor dem Thermoblock, um eine konstante Tassenfüllung zu erreichen

Die WO 02/100 227 A1 beschreibt eine Kaffeemaschine mit einer hinter der Heizeinrichtung angeordneten Rückführleitung. Ein Ventil steuert dabei, entsprechend den vorherrschenden Bedingungen, ob das erhitzte Wasser der Brüheinrichtung oder über die Rückführleitung wieder dem Wasservorratsbehälter zugeführt wird. Die EP 0 797 945 A1 beschreibt eine Filterkaffeemaschine mit einem Frischwassertank sowie zumindest einem Heizelement zum Erhitzen von Wasser. Über eine Leitung wird Wasser zurück in einen Wasservorratsbehälter geführt.

Aufgabe der vorliegenden Erfindung ist es, eine Vorrichtung anzugeben, bei der bereits die erste gezapfte Tasse die gewünschte Getränketemperatur aufweist.

Diese Aufgabe wird dadurch gelöst, dass die Rückführleitung bei der eingangs genannten Vorrichtung hinter der Heizeinrichtung den zweiten Abschnitt über das Rückführventil mit dem ersten Abschnitt der Flüssigkeitsleitung verbindet, so dass das von der Heizeinrichtung erhitzte Wasser aus dem zweiten in den ersten Abschnitt der Flüssigkeitsleitung rückführbar ist und dass in dem ersten Abschnitt der Flüssigkeitsleitung ein Steuerventil angeordnet ist, das mit einem Auslauf der Rückführleitung verbunden ist. Das Wasser wird nach der Heizeinrichtung somit nicht stets in die Brühkammer abgegeben, sondern kann wieder an den Einlauf des Heizsystems zurückgeführt werden. Bereits einmal noch unzureichend erhitztes Wasser kann so noch einmal oder mehrmals durch die Heizeinrichtung geschickt werden, bis es die gewünschte Temperatur erreicht hat. Erst dann unterbricht das Rückführventil die Rückführung, und das ausreichend erhitzte Wasser wird der Brühkammer zugeführt. Mit der erfindungsgemäßen Vorrichtung ist es also möglich, die für den Aufbrühvorgang erforderliche Wassertemperatur schneller zu erreichen. Da der Heizeinrichtung bereits vorgewärmtes Wasser zugeführt wird, ist weniger Zeit erforderlich, um das Wasser auf Brühtemperatur zu erhitzen. Das Rückführventil öffnet die Rückführleitung dabei nur so lange, bis die erforderliche Brühtemperatur am Ausgang der Heizeinrichtung erreicht ist.

Grundsätzlich erfolgt die Bewegung des Wassers in den Flüssigkeitsleitungen nach dem Schwerkraftprinzip. Dabei kann es vorkommen, dass sich das Wasser nicht zuverlässig oder nicht mit einer vorbestimmbaren definierten Strömungsgeschwindigkeit, sondern schwallweise unkontrolliert durch die Flüssigkeitsleitungen bewegt. Nach einer vorteilhaften Ausgestaltung der Erfindung ist deswegen im ersten Abschnitt der Flüssigkeitsleitung eine Pumpe zwischen der Einmündung der Rückführleitung in den ersten Abschnitt und der Heizeinrichtung angeordnet. Damit können eine bestimmte Strömungsgeschwindigkeit und ein bestimmter Druck im wasserführenden System über die Leistung der Pumpe eingestellt werden.

Die Pumpe kann kontinuierlich oder diskontinuierlich betrieben werden. Ihr diskontinuierlicher Betrieb teilt sich in Betriebsintervalle und Pausenintervalle auf. Je nachdem, welche Wassermenge erhitzt bzw. welche Wassertemperatur erreicht werden soll, also je nach erforderlichem Druck und Strömungsgeschwindigkeit, kann die Pumpe mit unterschiedlichem Betriebs-/Pausen-Intervallverhältnis betrieben werden. Soll das Wasser zum Beispiel auf Brühtemperatur erwärmt werden, ist ein Betriebs-/Pausenverhältnis von 1:2 vorteilhaft, z. B. mit einem Betrieb der Pumpe für 10 Sekunden, gefolgt von 20 Sekunden Pause. Bei diesem Verhältnis wird die Brühtemperatur am schnellsten erreicht.

Mit der erfindungsgemäßen Vorrichtung ist auch die Erzeugung von Dampf möglich, z. B. mit einem Betriebs-/Pausenverhältnis der Pumpe von etwa 0,5:2.

Die Ansteuerung der Pumpe kann durch eine Steuereinheit erfolgen, die den Betrieb der Pumpe in Abhängigkeit von unterschiedlichen Vorgabewerten steuert. Vorgabewerte können vom Benutzer eingegebene, von Sensoren ermittelte oder programmierte Werte sein.

Um auch bei kaltem Gerät in sehr kurzer Zeit die notwendige Brühtemperatur zu erreichen, ist in dem ersten Abschnitt der Flüssigkeitsleitung ein Steuerventil am Auslauf der Rückführleitung angeordnet sein. Das Steuerventil kann die Zusammenführung des aus der Rückführleitung kommenden vorgeheizten Wassers mit dem Kaltwasser aus dem Wasserbehälter steuern. Sobald das Steuerventil die Wasserzufuhr aus dem Wasserbehälter sperrt, zirkuliert das Wasser nur noch in einem Rückführ-Kreislauf zwischen Steuerventil, Heizeinrichtung, Rückführventil und Rückführleitung. Die Anordnung der Pumpe zwischen dem Steuerventil und der Heizeinrichtung im ersten Abschnitt erweist sich auch hier als vorteilhaft, weil sich die Pumpe dann innerhalb des Kreislaufs befindet. Da nach dem Absperren der Kaltwasserleitung durch das Steuerventil ausschließlich vorgewärmtes Wasser durch die Heizeinrichtung gefördert wird, kann die Brühtemperatur in kürzerer Zeit erreicht werden. Die Dimensionierung der Vorrichtung kann dabei so ausgelegt werden, dass die in dem Rückführ-Kreislauf zirkulierende Wassermenge für einen Aufbrühvorgang ausreicht.

Je nach Konstruktion der Brühkammer kann deren Wärmekapazität variieren. Sie kann dadurch z. B. auf Brühtemperatur erhitztes Wasser zu stark abkühlen. Vor allem bei kleinen Kaffeemengen kann die Kaffeetemperatur infolgedessen zu niedrig sein. Um das zu vermeiden, kann die Rückführleitung bei einer weiteren vorteilhaften Ausführungsform der Erfindung durch die Brühkammer geführt werden. Erhitztes Wasser in der Rückführleitung gibt dann Wärme an die Brühkammer ab. Die Rückführleitung kann so zum Vorwärmen der Brühkammer verwendet werden. Die Zeit bis zum ersten Brühvorgang verkürzt sich damit.

Bei einer vorteilhaften Ausgestaltung der Erfindung sind in der Brühkammer Kanäle als Teil der Rückführleitung angeordnet. Bei einer zylinderförmigen Brühkammer können die Kanäle beispielsweise spiralförmig innerhalb der Mantelfläche der Brühkammer verlaufen. Für eine gute Wärmeübertragung weisen die Kanäle eine geringe Wandstärke auf und/oder bestehen aus Materialien mit hoher Wärmeleitfähigkeit.

Damit das Rückführventil die Rückführleitung nicht länger als notwendig öffnet und/oder das Steuerventil die Kaltwasserzufuhr optimal vornimmt, kann erfindungsgemäß zumindest am Ausgang der Heizeinrichtung ein Temperatursensor zur Messung der Wasser- und/oder Dampftemperatur angeordnet sein. Auch die Anordnung mehrerer Temperatursensoren ist möglich, zum Beispiel je einer am Ausgang der Heizeinrichtung, nahe der Einmündung der Rückführleitung in den ersten Abschnitt und/oder an oder in der Brühkammer. Die Steuereinheit als Bindeglied zwischen den Sensoren und den Ventilen sowie der Pumpe wertet die von den Sensoren übertragenen Signale aus und bewirkt daraufhin die Stellvorgänge des Rückführventils, des Steuerventils und/oder der Pumpe.

Für die Kaffeezubereitung ist von Vorteil, wenn insbesondere zum Aufschäumen von Milch eine separate Entnahmestelle für Wasserdampf existiert. Bei einer weiteren vorteilhaften Ausgestaltung der Erfindung ist dafür im zweiten Abschnitt der Flüssigkeitsleitung ein Schaltventil angeordnet, das mit einer Milchschaumdüse verbunden ist. Das Schaltventil ist dabei bevorzugt zwischen dem Rückführventil und der Brühkammer angeordnet, weil erst dort die maximale Brüh- bzw. Dampftemperatur zur Verfügung steht. Nach dem Schaltventil teilt sich der zweite Abschnitt der Flüssigkeitsleitung auf, in einen inneren Abschnitt, der zur Brühkammer, und einen äußeren Abschnitt, der zur Düse führt. Die Steuerung des Schaltventils kann ebenfalls durch die Steuereinheit erfolgen. Ein Benutzer der Kaffeemaschine kann über Bedienelemente der Kaffeemaschine auswählen, ob er brühheißes Wasser für einen Brühvorgang oder Wasserdampf beispielsweise zum Aufschäumen von Milch benötigt. Je nach Auswahl wird das Wasser von der Heizeinrichtung so lange erhitzt, bis der Temperatursensor am Ausgang der Heizeinrichtung die entsprechende Wasser- oder Dampftemperatur misst. Temperaturabhängig schaltet die Steuereinheit das Schaltventil auf Durchgang zur Brühkammer oder Aufschaumdüse.

Bei der Durchleitung von Wasserdampf durch die Flüssigkeitsleitungen kann es zu einer störenden Geräuschbildung kommen. Um dies zumindest zu vermindern, kann bei einer vorteilhaften Ausführungsform der Erfindung in der Rückführleitung ein schalldämpfendes Element angeordnet sein. Es kann beispielsweise in Form einer Kammer mit darin angeordnetem Labyrinth ausgestaltet sein. Die Durchführung des Dampfes durch das Labyrinth hat neben der schalldämpfenden Wirkung auch den Effekt, dass der Wasserdampf zum Teil kondensiert und dem ersten Abschnitt der Flüssigkeitsleitung in Form von warmem Wasser zugeführt werden kann.

Nachfolgend werden Ausführungsbeispiele der anhand von schematischen Figuren näher erläutert. Es zeigen:
Figur 1 eine erste Ausführungsform der Vorrichtung;
Figur 2 eine zweite Ausführungsform der Vorrichtung;
Figur 2a eine Abwandlung der in Figur 2 dargestellten Ausführungsform;
Figur 3 eine Ausführungsform der erfindungsgemäßen Vorrichtung;
Figur 4 eine weitere Ausführungsform der erfindungsgemäßen Vorrichtung.

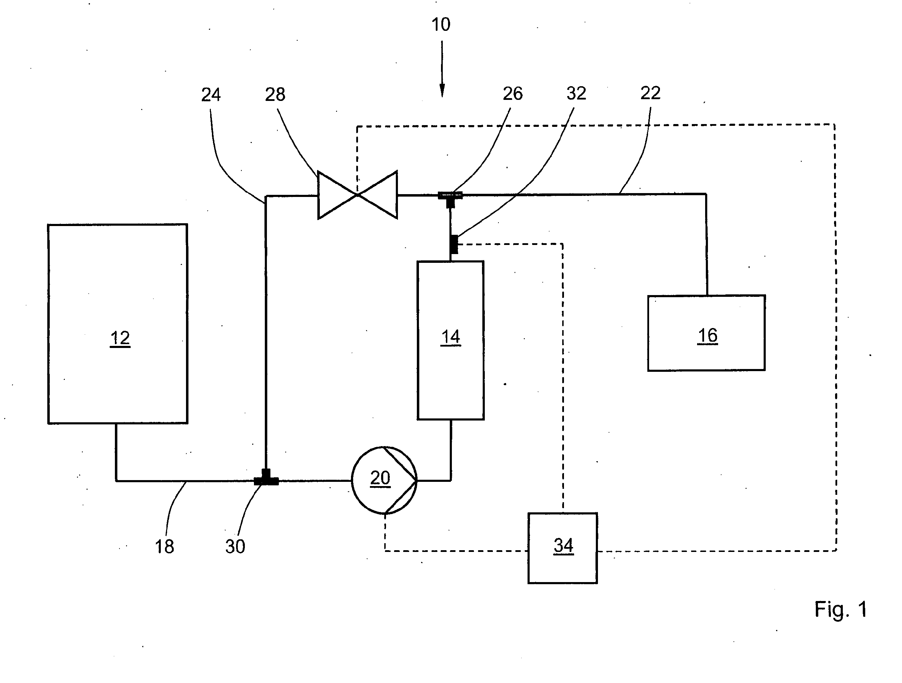

Figur 1 zeigt den prinzipiellen Aufbau einer Pad-Kaffeemaschine 10 als Beispiel für eine Heißgetränkezubereitungsvorrichtung. Die Hauptbestandteile der Pad-Kaffeemaschine 10 sind ein Wassertank 12, ein Durchlauferhitzer 14 als Heizeinrichtung und eine Brühkammer 16. Der Wassertank 12 ist über eine Wasserleitung 18 mit dem Durchlauferhitzer 14 verbunden. In der Wasserleitung 18 ist eine Pumpe 20 angeordnet. Eine Wasserleitung 22 verbindet den Durchlauferhitzer 14 mit der Brühkammer 16. Von der Leitung 22 zweigt kurz hinter dem Durchlauferhitzer 14 eine Rückführleitung 24 ab. Die Abzweigungsstelle bildet ein T-Stück 26. Teil der Rückführleitung 24 ist ein Absperrventil 28. Die Rückführleitung 24 mündet in ein T-Stück 30 in der Leitung 18. Das T-Stück 26 bildet einen Einlauf und das T-Stück 30 einen Auslauf der Rückführleitung 24. Am Ausgang des Durchlauferhitzers 14 noch vor dem T-Stück 26 befindet sich ein Temperatursensor 32. Er steht in Verbindung mit einer Steuereinheit 34, die über (gestrichelt dargestellte) Steuerleitungen auch mit der Pumpe 22 und dem Rückführventil 28 verbunden ist.

Im Betrieb der Pad-Kaffeemaschine 10 pumpt die Pumpe 22 Wasser aus dem Wassertank 12 durch die Wasserleitung 18 in den Durchlauferhitzer 14. Dort wird das Wasser erhitzt und durch die Leitung 22 zur Brühkammer 16 gefördert. Zu Beginn eines Brühvorgangs ist das Rückführventil 28 geöffnet, so dass das vom Durchlauferhitzer 14 erhitzte Wasser sowohl in die Wasserleitung 22 als auch durch die Rückführleitung 24 wieder zurück in die Wasserleitung 18 gepumpt wird. Zu diesem Zeitpunkt befindet sich in der Brühkammer 16 bereits ein Kaffee-Pad (in Figur 1 nicht dargestellt). Das Kaffee-Pad stellt für das Wasser einen gewissen Widerstand dar. Der Widerstand des Kaffee-Pads in der Brühkammer 16 führt dazu, dass der Hauptteil des aus dem Durchlauferhitzer 14 kommenden heißen Wassers entlang des Weges mit dem geringeren Widerstand, nämlich durch die Rückführleitung 24 zurück in die Wasserleitung 18 gelangt. Dort vermischt es sich mit dem aus dem Wassertank 12 kommenden kalten Wasser, so dass die Pumpe 20 dem Durchlauferhitzer 14 in einem zweiten Zyklus bereits vorgewärmtes Wasser zuführt.

Das trotz des dortigen höheren Widerstands in die Brühkammer 16 gelangende heiße Wasser dient zur Befeuchtung des Kaffee-Pads. Ein bereits angefeuchtetes Kaffee-Pad führt zu einer noch besseren Entfaltung der Aromastoffe während des Aufbrühvorgangs. Außerdem heizt das heiße Wasser die Brühkammer 16 vor.

Sobald der Temperatursensor 32 am Ausgang des Durchlauferhitzers 14 die erforderliche Brühtemperatur misst, schließt die Steuereinheit 34 das Rückführventil 28 und führt das brühheiße Wasser direkt der Brühkammer 16 zu. In der bereits vorgeheizten Brühkammer 16 kann sich das heiße Brühwasser jetzt nicht mehr so stark abkühlen, dass die daraus resultierende Kaffeetemperatur in der Tasse zu niedrig wäre.

Die Steuereinheit 34 hat die Funktion, die vom Temperatursensor 32 übertragenen Signale in entsprechende Schalt- oder Stellfunktionen umzuwandeln und das Öffnen und Schließen des Rückführventils 28 zu bewirken. Sie kann die Pumpe 20 bei Bedarf in einem Intervallbetrieb arbeiten lassen. Sie steuert deren Leistung, zum Beispiel durch deren Betrieb in einem Betriebs-/Pausenzyklus.

Zu Beginn eines Brühvorgangs, insbesondere nach langen Stillstandzeiten oder bei zu geringer Temperatur der Pad-Kaffeemaschine, wird das vom Durchlauferhitzer 14 erhitzte Wasser während einer so genannten Rückführphase in einem Kreislauf wieder vor den Durchlauferhitzer 14 zurückgeführt. Dies erfolgt so lange, bis das Wasser die Brühtemperatur erreicht hat, wobei während dieser Zeit die flüssigkeitsführenden Teile der Kaffeemaschine bis hin zur Brühkammer 16 mit dem im Kreislauf zirkulierenden Wasser vorgewärmt werden. Damit ist gewährleistet, dass die resultierende Wassertemperatur in der Tasse vor allem bei kaltem Gerät von Anfang an immer ausreichend hoch ist.

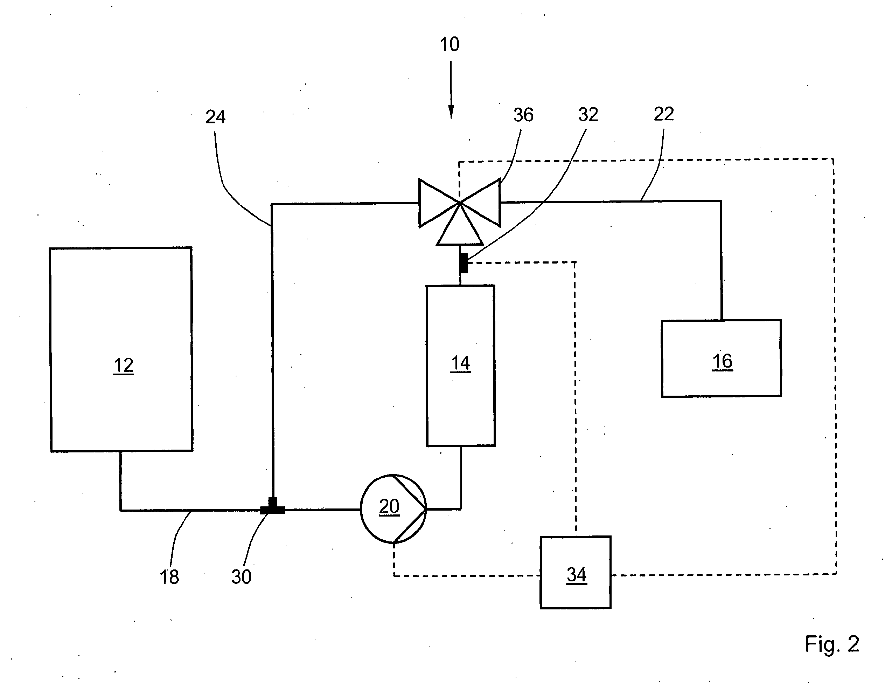

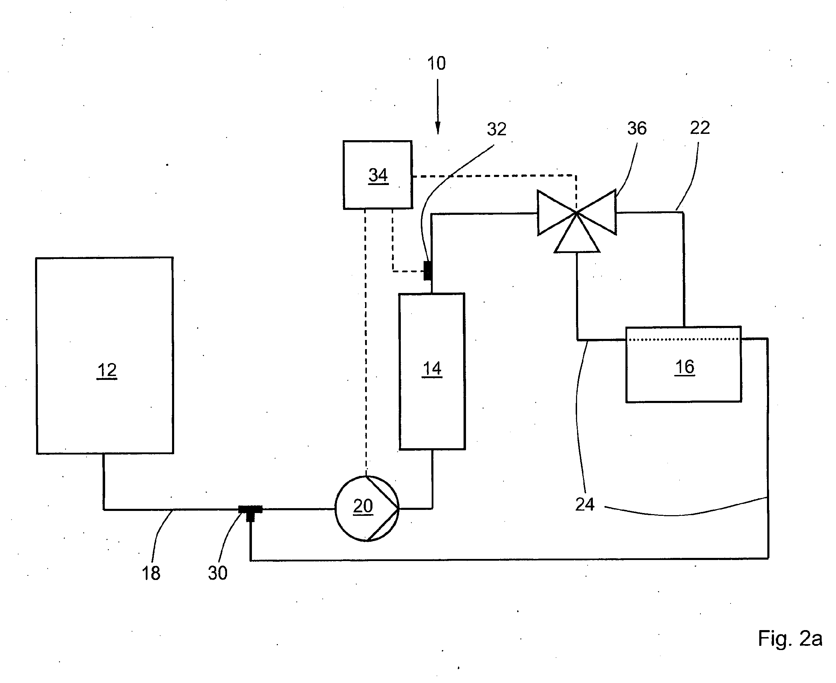

Figur 2 zeigt den bereits aus Figur 1 bekannten Aufbau der Pad-Kaffeemaschine 10. Im Unterschied zu Figur 1 kommt hier für das dortige Rückführventil 28 ein 2-Wegeventil 36 zur Anwendung. Es ist nicht wie das Rückführventil 28 in der Rückführleitung 24, sondern anstelle des T-Stücks 26 (siehe Figur 1) in der Wasserleitung 22 angeordnet. Es bildet also zugleich den Einlauf der Rückführleitung 24. Im Übrigen wurden gleiche Teile mit gleichen Bezugszeichen versehen. Dies gilt auch für die nachfolgenden Figuren.

Das Wasser kann nun je nach Schaltstellung des 2-Wegeventils 36 entweder in die Wasserleitung 22 oder in die Rückführleitung 24 fließen. Über eine entsprechende Steuerung ist sichergestellt, dass kein heißes Wasser in die Brühkammer 16 eintritt, so lange sich kein Kaffeepad in der Brühkammer 16 befindet. Die Gefahr von Verbrühungen eines Benutzers infolge von aus der Brühkammer 16 austretenden heißen Wassers wird so vermieden. Dazu stellt ein in der Brühkammer 16 angeordneter Sensor (in Figur 2 nicht dargestellt) die Anwesenheit eines Kaffee-Pads in der Brühkammer 16 fest. Die Steuereinheit 34, die mit dem Sensor verbunden ist, kann das 2-Wegeventil 36 kurzzeitig so schalten, dass auch bei dieser Anordnung die Brühkammer 16 vorgewärmt sowie ein darin angeordnetes Kaffee-Pad befeuchtet wird.

Zu Beginn eines Brühvorgangs fließt das vom Durchlauferhitzer 14 kommende heiße Wasser zumindest zum größten Teil durch die Rückführleitung 24 zurück in die Wasserleitung 18 vor den Durchlauferhitzer 14 zurück. Die Schaltstellung des 2-Wegeventils bleibt so lange erhalten, bis der Temperatursensor 32 der Steuereinheit 34 ein entsprechendes Signal übermittelt, dass eine vorbestimmte Wassertemperatur erreicht ist. Danach schaltet das 2-Wegeventil 36 um, so dass die gesamte vom Durchlauferhitzer 14 kommende Wassermenge durch die Wasserleitung 22 in die Brühkammer 16 fließt. Die Rückführleitung 24 sollte kurz sein, so dass das heiße Wasser in der Rückführphase so wenig Wärme wie möglich verliert.

Figur 2a zeigt die bereits aus Figur 2 bekannte Ausführungsform der Pad-Kaffeemaschine 10 mit dem Unterschied, dass die Rückführleitung 24 durch die Brühkammer 16 geführt ist. Das vom Durchlauferhitzer 14 erhitzte Wasser fließt durch Kanäle (in Figur 2a durch eine punktierte Linie in der Brühkammer 16 symbolisiert) in der Brühkammer 16 zurück zur Wasserleitung 18. Dadurch wird die Brühkammer 16 vorgeheizt.

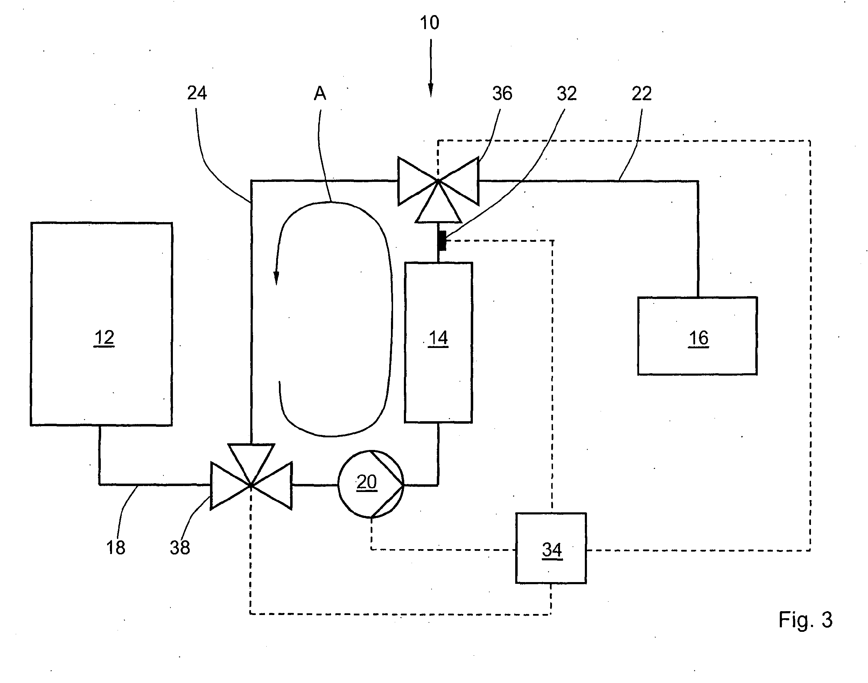

Figur 3 zeigt eine Ausführungsform der erfindungsgemäßen Pad-Kaffeemaschine 10, bei der im Unterschied zu den Figuren 1, 2 und 2a ein 2-Wegeventil 38 auch am Auslauf der Rückführleitung 24 in der Wasserleitung 18 angeordnet ist. Durch das 2-Wegeventil 38 erfolgt die Zusammenführung des durch die Rückführleitung 24 geförderten Wassers mit dem kalten Wasser aus dem Wassertank 12 geregelt. Die Steuereinheit 34 schaltet das 2-Wegeventil 38 so, dass die Zufuhr von Kaltwasser während der Rückführphase ganz oder teilweise gesperrt ist. Während der Rückführphase fördert die Pumpe 20 das Wasser durch den Durchlauferhitzer 14 in die Wasserleitung 22 zum 2-Wegeventil 36 und über die Rückführleitung 24 zurück zum 2-Wegeventil 38. Ist die Kaltwasserzufuhr aus dem Wassertank 12 durch das 2-Wegeventil 38 gesperrt, zirkuliert das Wasser ausschließlich in dem mit dem Pfeil A symbolisierten Kreislauf der Rückführphase. Das geschieht so lange, bis der Temperatursensor 32 der Steuereinheit 34 das Erreichen einer vorbestimmten Wassertemperatur signalisiert und diese das 2-Wegeventil 36 umschaltet, so dass das aus dem Durchlauferhitzer 14 kommende Wasser vollständig durch die Wasserleitung 22 in die Brühkammer 16 gefördert wird. Günstigerweise entspricht die im Kreislauf A zirkulierende Wassermenge genau der Wassermenge, die für die Aufbrühung einer Kaffeetasse notwendig ist. Damit ist gewährleistet, dass selbst nach langen Stillstandszeiten der Kaffeemaschine die erste Kaffeetasse nach kürzester Zeit mit der gewünschten hohen Kaffeetemperatur zur Verfügung steht.

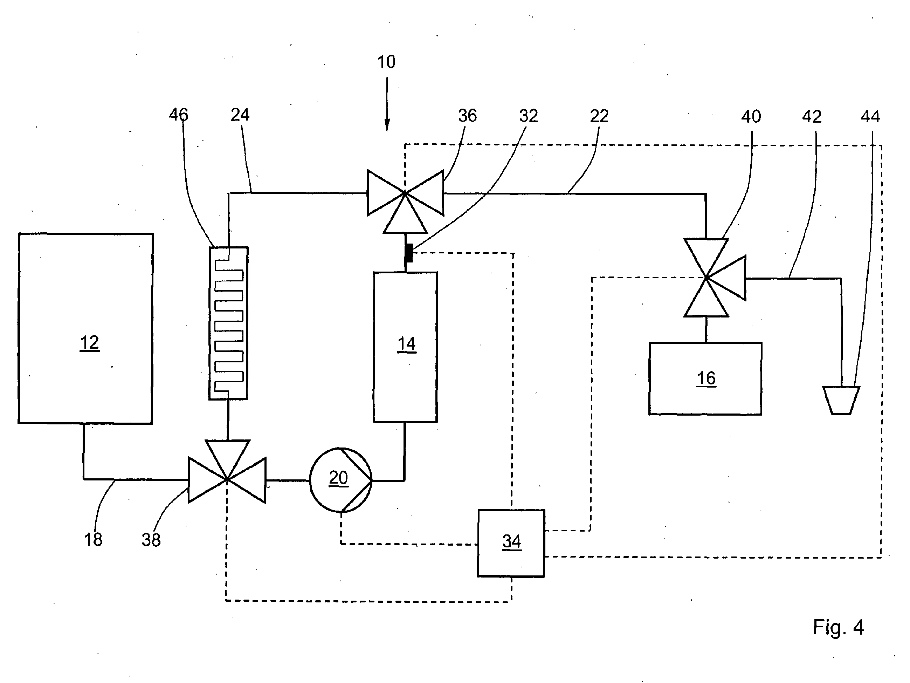

Figur 4 weist zusätzlich zu dem in Figur 3 dargestellten Aufbau der Pad-Kaffeemaschine 10 ein 2-Wegeventil 40 in der Wasserleitung 22 zwischen dem 2-Wegeventil 36 und der Brühkammer 16 auf. Von dem 2-Wegeventil 40 zweigt eine Dampfleitung 42 ab, deren Auslauf mit einer Dampfdüse 44 verbunden ist. Die Erzeugung von Wasserdampf funktioniert prinzipiell wie die von brühheißem Wasser. Im Unterschied dazu durchläuft das Wasser für Wasserdampf die Rückführphase so lange, bis am Temperatursensor 32 die gewünschte Dampftemperatur gemessen wird. Ist diese erreicht, schaltet die Steuereinheit 34 das 2-Wegeventil 36 um, so dass der Wasserdampf vollständig zur Dampfdüse 44 geleitet wird.

In der Rückführleitung 24 ist ein Schalldämpfer 46 angeordnet. Er dient im Dampfbetrieb der Verminderung von Geräuschen, die durch fast kochendes Wasser bei der Durchleitung durch die Rückführleitung 24 entstehen. Er funktioniert nach dem Prinzip eines Labyrinths und führt neben der Geräuschdämmung auch dazu, dass das Wasser im Schalldämpfer zumindest zum Teil kondensiert und dem ersten Abschnitt der Flüssigkeitsleitung in Form von warmem Wasser zugeführt werden kann.

Da es sich bei den vorhergehenden, detailliert beschriebenen Pad-Kaffeemaschinen 10 um Ausführungsbeispiele handelt, können sie in üblicher Weise vom Fachmann in einem weiten Umfang modifiziert werden, ohne den Bereich der Erfindung zu verlassen. Insbesondere kann der konkrete Verlauf der Rückführleitung 24 in anderer Form als in der hier beschriebenen erfolgen. Ebenso kann die Anordnung oder die Ausführung der Ventile 28, 36, 38, 40 sowie der T-Stücke 26 und 30 in einer anderen Form erfolgen, wenn dies aus Platz- oder designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10: - Pad-Kaffeemaschine
- 12: - Wassertank
- 14: - Heizeinrichtung, Durchlauferhitzer
- 16: - Brühkammer
- 18,22: - Wasserleitungen
- 20: - Pumpe
- 24: - Rückführleitung
- 26, 30: - T-Stücke
- 28: - Rückführventil
- 32: - Temperatursensor
- 34: - Steuereinheit
- 36, 38, 40: - 2-Wegeventile
- 42: - Dampfleitung
- 44: - Dampfdüse
- 46: - Schalldämpfer

## Patentansprüche

1. Heißgetränkezubereitungsvorrichtung (10), insbesondere Pad-Kaffeemaschine, mit einem Wasserbehälter (12), einer Heizeinrichtung (14) und einer Brühkammer (16), die durch eine Flüssigkeitsleitung (18, 22) miteinander verbunden sind, deren erster Abschnitt (18) zwischen dem Wasserbehälter (12) und der Heizeinrichtung (14) und deren zweiter Abschnitt (22) zwischen der Heizeinrichtung (14) und der Brühkammer (16) liegt, und mit einer Rückführleitung (24), in der oder an deren Einlauf ein Rückführventil (28, 36) angeordnet ist, und die hinter der Heizeinrichtung den zweiten Abschnitt (18) über das Rückführventil (28; 36) mit dem ersten Abschnitt (22) der Flüssigkeitsleitung verbindet, **dadurch gekennzeichnet, dass** in dem ersten Abschnitt (18) der Flüssigkeitsleitung ein Steuerventil (38) angeordnet ist, das mit einem Auslauf der Rückführleitung (24) verbunden ist.

2. Heißgetränkezubereitungsvorrichtung (10) nach Anspruch 1, **dadurch gekennzeichnet, dass** das Rückführventil ein 2-Wegeventil (36) ist.

3. Heißgetränkezubereitungsvorrichtung (10) nach Anspruch 1 mit einer Pumpe (20) in dem ersten Abschnitt (18) der Flüssigkeitsleitung.

4. Heißgetränkezubereitungsvorrichtung (10) nach einem der vorhergehenden Ansprüche, **dadurch gekennzeichnet, dass** die Rückführleitung (24) durch die Brühkammer (16) geführt ist.

5. Heißgetränkezubereitungsvorrichtung (10) nach Anspruch 4, **dadurch gekennzeichnet, dass** in der Brühkammer (16) Kanäle angeordnet sind, die Teil der Rückführleitung (24) sind.

6. Heißgetränkezubereitungsvorrichtung (10) nach einem der vorhergehenden Ansprüche, **dadurch gekennzeichnet, dass** am Ausgang der Heizeinrichtung (14) ein Temperatursensor (32) zur Messung der Wasser- und/oder Dampftemperatur angeordnet ist.

7. Heißgetränkezubereitungsvorrichtung (10) nach einem der vorhergehenden Ansprüche, **dadurch gekennzeichnet, dass** in der Rückführleitung (24) ein schalldämpfendes Element (46) angeordnet ist.

8. Heißgetränkezubereitungsvorrichtung (10) nach einem der vorhergehenden Ansprüche mit einer Wasser- und/oder Dampfdüse (44), **dadurch gekennzeichnet, dass** im zweiten Abschnitt (22) der Flüssigkeitsleitung ein Schaltventil (40) angeordnet ist, durch das die Flüssigkeitsleitung (22) in eine mit der Brühkammer (16) und eine mit der Düse (44) verbundene Flüssigkeitsleitung (42) aufteilbar ist.

9. Heißgetränkezubereitungsvorrichtung (10) nach einem der Ansprüche 6 bis 8, **dadurch gekennzeichnet, dass** eine Steuereinrichtung (34) in Abhängigkeit von Signalen des Temperatursensors (32) die Ventile (28; 36; 38; 40) und/oder die Pumpe (20) steuert.

## Claims

1. Hot drink preparation device (10), particularly sachet coffee machine, with a water container (12), a heating device (14) and a brewing chamber (16), which are connected together by a liquid duct (18, 22), the first section (18) of which lies between the water container (12) and the heating device (14) and the second section (22) of which lies between the heating device (14) and the brewing chamber (16), and with a return duct (24), in which or at the inlet of which a return valve (28, 36) is arranged, and which behind the heating device connects the second section (18) via the return valve (28; 36) with the first section (22) of the liquid duct, **characterised in that** a control valve (38) connected with an outlet of the return duct (24) is arranged in the first section (18) of the liquid duct.

2. Hot drink preparation device (10) according to claim 1, **characterised in that** the return valve is a two-way valve (36).

3. Hot drink preparation device (10) according to claim 1 with a pump (20) in the first section (18) of the liquid duct.

4. Hot drink preparation device (10) according to any one of the preceding claims, **characterised in that** the return duct (24) is led through the brewing chamber (16).

5. Hot drink preparation device (10) according to claim 4, **characterised in that** channels which are part of the return duct (24) are arranged in the brewing chamber (16).

6. Hot drink preparation device (10) according to any one of the preceding claims, **characterised in that** a temperature sensor (32) for measuring the water and/or steam temperature is arranged at the outlet of the heating device (14).

7. Hot drink preparation device (10) according to any one of the preceding claims, **characterised in that** a sound-damping element (46) is arranged in the return duct (24).

8. Hot drink preparation device (10) according to any one of the preceding claims with a water and/or steam nozzle (44), **characterised in that** a switching valve (40), by which the liquid duct (22) is separable into a liquid duct (42) connected with the brewing chamber (16) and a liquid duct (42) connected with the nozzle (44), is arranged in the second section (22) of the liquid duct.

9. Hot drink preparation device (10) according to any one of claims 6 to 8, **characterised in that** a control device (34) controls the valves (28; 36; 38; 40) and/or the pump (20) in dependence on signals of the temperature sensor (32).

## Revendications

1. Dispositif de préparation de boissons chaudes (10), en particulier machine à café à dosette, comprenant un récipient d'eau (12), un dispositif de chauffage (14) et une chambre de percolation (16), qui sont reliés entre eux par une conduite de liquide (18, 22), dont la première partie (18) se situe entre le réservoir d'eau (12) et le dispositif de chauffage (14) et dont la seconde partie (22) se situe entre le dispositif de chauffage (14) et la chambre de percolation (16), et une conduite retour (24), dans laquelle ou sur l'arrivée de laquelle est disposé une vanne de reprise (28, 36) et qui relie après le dispositif de chauffage la seconde partie (18) par la vanne de reprise (28 ; 36) à la première partie (22) de la conduite de liquide, **caractérisé en ce que** dans la première partie (18) de la conduite de liquide est disposé une vanne de commande (38), qui est relié à une sortie de la conduite retour (24).

2. Dispositif de préparation de boissons chaudes (10) selon la revendication 1, **caractérisé en ce que** la vanne de reprise est une vanne à deux voies (36).

3. Dispositif de préparation de boissons chaudes (10) selon la revendication 1 comprenant une pompe (20) dans la première partie (18) de la conduite de liquide.

4. Dispositif de préparation de boissons chaudes (10) selon l'une quelconque des revendications précédentes, **caractérisé en ce que** la conduite retour (24) est guidée à travers la chambre de percolation (16).

5. Dispositif de préparation de boissons chaudes (10) selon la revendication 4, **caractérisé en ce que** dans la chambre de percolation (16) sont disposés des canaux qui fond partie de la conduite retour (24) .

6. Dispositif de préparation de boissons chaudes (10) selon l'une quelconque des revendications précédentes, **caractérisé en ce que** un capteur de température (32) pour la mesure de la température d'eau et/ou de la température de vapeur est disposé à la sortie du dispositif de chauffage (14).

7. Dispositif de préparation de boissons chaudes (10) selon l'une quelconque des revendications précédentes, **caractérisé en ce que** un élément (46) insonorisant est disposé dans la conduite retour (24).

8. Dispositif de préparation de boissons chaudes (10) selon l'une quelconque des revendications précédentes comprenant une buse d'eau et/ou une buse de vapeur (44), **caractérisé en ce que** dans la seconde partie (22) de la conduite de liquide est disposé une vanne de commande (40), par lequel la conduite de liquide (22) peut être divisée en une conduite reliée à la chambre de percolation (16) et une conduite de liquide (42) reliée à la buse (44).

9. Dispositif de préparation de boissons chaudes (10) selon l'une quelconque des revendications 6 à 8, **caractérisé en ce que** un dispositif de commande (34) commande de vannes (28 ; 36 ; 38 ; 40) et/ou la pompe (20) en fonction de signaux du capteur de température (32).
